Europäisches Patentamt

European Patent Office

Office européen des brevets

(11) Veröffentlichungsnummer: **0 288 683 B1**

# EUROPÄISCHE PATENTSCHRIFT

(45) Veröffentlichungstag der Patentschrift: **13.11.91**

(51) Int. Cl.5: **G01P 3/489**

(21) Anmeldenummer: **88102855.9**

(22) Anmeldetag: **26.02.88**

(54) **Verfahren und Schaltung zu dessen Durchführung zur digitalen Drehzahlmessung.**

(30) Priorität: 16.03.87 CH 1001/87

(43) Veröffentlichungstag der Anmeldung:
02.11.88 Patentblatt 88/44

(45) Bekanntmachung des Hinweises auf die
Patenterteilung:
13.11.91 Patentblatt 91/46

(84) Benannte Vertragsstaaten:
DE FR GB IT SE

(56) Entgegenhaltungen:
DE-A- 3 008 876
GB-A- 2 013 896
US-A- 3 757 167
US-A- 3 935 537

IEEE 1981 IECI PROCEEDINGS, "Application
of Mini and Microcomputers", 9-12 November 1981, Seiten 381-386, San Fransisco CA;
T. OHMAE et al.: microprocessor-controlled
high-accuracy wide-range speed regulator
for motor drives"

PATENT ABSTRACTS OF JAPAN, Band 7, Nr.
152 (P-208)[1297], 5. Juli 1983; & JP-A-58 63
858 (SHINPO KOGYO K.K.) 15-04-1983

(73) Patentinhaber: **JD-Technologie AG**
**c/o Gestinor Services AG Chamerstrasse 50**
**CH-6300 Zug(CH)**

(72) Erfinder: **Fischer, Paul**
**Weihermattstrasse 5**
**CH-8962 Bergdietikon(CH)**
Erfinder: **Bögli, Peter**
**Schützenhausstrasse 43**
**CH-2552 Orpund(CH)**

(74) Vertreter: **Blum, Rudolf Emil Ernst et al**
**c/o E. Blum & Co Patentanwälte Vorderberg**
**11**
**CH-8044 Zürich(CH)**

## Beschreibung

Die Erfindung bezieht sich auf ein Verfahren zur digitalen Drehzahlmessung, bei dem eine erste Pulsfolge mit drehzahlproportionaler Frequenz und eine zweite Pulsfolge mit konstanter Referenzfrequenz erzeugt werden, und bei dem in einem Messzyklus sowohl die Zahl der Pulse der ersten Pulsfolge als auch die Zahl der Pulse der zweiten Pulsfolge bestimmt werden, wobei ein Messzyklus jeweils durch einen Puls der ersten Pulsfolge ausgelöst und beendet wird und mindestens eine vorgegebene Mindestzahl von Pulsen der zweiten Pulsfolge umfasst.

Im weiteren betrifft die Erfindung eine Schaltung zur Durchführung dieses Verfahrens.

In jedem Motor-Drehzahl-Regelsystem muss die aktuelle Drehzahl (Ist-Drehzahl) gemessen werden, damit über einen Vergleich mit einer Führgrösse (Soll-Drehzahl) in einem Regler eine Stellgrösse (z.B. die Ankerspannung eines Elektromotors) berechnet werden kann. Sofern der Regler digital, z.B. mittels Mikroprozessor, arbeitet, ist es vorteilhaft, zur Drehzahlerfassung eine Vorrichtung zu verwenden, die eine Pulsfolge erzeugt, deren Frequenz zur Drehzahl proportional ist (z.B. Inkrementalencoder).

Zur Auswertung dieser Pulsfolge sind zwei grundsätzliche Verfahren bekannt:

Bei der direkten Messung werden die vom Encoder erzeugten Pulse über einen vorgegebenen Zeitraum gezählt; die Anzahl Pulse pro Zeitraum ist ein Mass für die Drehzahl.

Bei der indirekten Messung werden die Pulse einer zweiten Pulsfolge mit konstanter Referenzfrequenz zwischen zwei aufeinanderfolgenden Pulsen der ersten Pulsfolge gezählt. Die Anzahl der gezählten Pulse ist proportional zur Periodendauer der ersten Pulsfolge und somit umgekehrt proportional zu deren Frequenz bzw. zur Drehzahl.

Unabhängig von der angewandten Messmethode ist zu verlangen, dass diese im gesamten zu beherrschenden Drehzahlbereich zwei Grundanforderungen genügt:

Es ist dies erstens eine je nach Anwendungsfall zu bestimmende relative Genauigkeit, was bedeutet, dass pro Messzyklus eine genügend grosse Anzahl von Impulsen berücksichtigt werden muss. Zweitens besteht das Erfordernis der raschen Verfügbarkeit der Messdaten. Das Resultat der Messung muss innert nützlicher Frist vorliegen, um sicherzustellen, dass das Regelsystem raschen Führgrössenänderungen zu folgen vermag.

Da sich erwiesen hat, dass die beiden vorangehend beschriebenen Messmethoden den erwähnten Anforderungen in vielen Fällen nicht oder nur ungenügend zu entsprechen vermögen, sind verschiedentlich verbesserte Mess-Verfahren vorgeschlagen worden.

So zeigen insbesondere die US-A 3 757 167, die GB-A 2 013 896 und die DE-A 3 008 876 ein auf der indirekten Messung basierendes Verfahren. Dabei wird ein Messzyklus durch einen Puls der drehzahlproportionalen Pulsfolge ausgelöst. Anschliessend werden die Pulse dieser Pulsfolge sowie diejenigen der Referenzpulsfolge gezählt bis eine vorgegebene Zahl von Referenzpulsen erreicht wird, worauf der Messzyklus durch den unmittelbar darauf folgenden Puls der drehzahlproportionalen Pulsfolge beendet wird. Durch Division der beiden Zählwerte und Multiplikation mit der bekannten Referenzfrequenz wird anschliessend die mittlere Frequenz der drehzahlproportionalen Pulsfolge und dadurch die mittlere Drehzahl berechnet.

Mit diesem Verfahren kann über einen grossen Drehzahlbereich die jeweilige Drehzahl mit weitgehend konstanter relativer Genauigkeit bestimmt werden. Als nachteilig erweist sich allerdings, dass der Regelrechner, der üblicherweise ohnehin mit einer Vielzahl von Aufgaben beschäftigt ist, zusätzlich durch die Aufbereitung und Verarbeitung dieser Messresultate belastet wird.

Die vorliegende Erfindung stellt sich deshalb die Aufgabe, das vorangehend beschriebene Messverfahren so zu modifizieren, dass der Regelrechner weitgehend von der Aufbereitung und Verarbeitung der Messresultate entlastet wird. Zusätzlich soll eine Schaltung zur Durchführung dieses Verfahrens geschaffen werden. Diese Aufgabe wird durch die unabhängigen Ansprüche gelöst.

Die wesentlichen Vorteile der Erfindung bestehen darin, dass die jeweilige Dauer eines Messzyklus so gewählt wird, dass der eine Zählwert immer einer ganzzahligen Potenz der Zahl 2 entspricht, wodurch sich die anschliessenden Rechenoperationen im Regelrechner, der üblicherweise im Binärsystem arbeitet, wesentlich vereinfachen, was zu einer Verkürzung der Rechenzeit und damit zu einer Entlastung des Regelrechners führt. Zusätzlich können die Zählwerte mit einer einfachen Schaltungsanordnung so aufbereitet werden, dass sie am Ende eines Messzyklus dem Regelrechner direkt in einem für die weitere Verarbeitung geeigneten Datenformat übergeben werden können, wodurch der Rechner von der Aufbereitung der Zählwerte entlastet wird.

Im folgenden wird die Erfindung anhand von Zeichnungen näher beschrieben. Dabei zeigen:

Fig. 1 das Prinzip des Verfahrens;

Fig. 2 den schematischen Aufbau einer möglichen Schaltung zur Durchführung des Verfahrens;

Fig. 3 ein mögliches Datenformat des Messresultats;

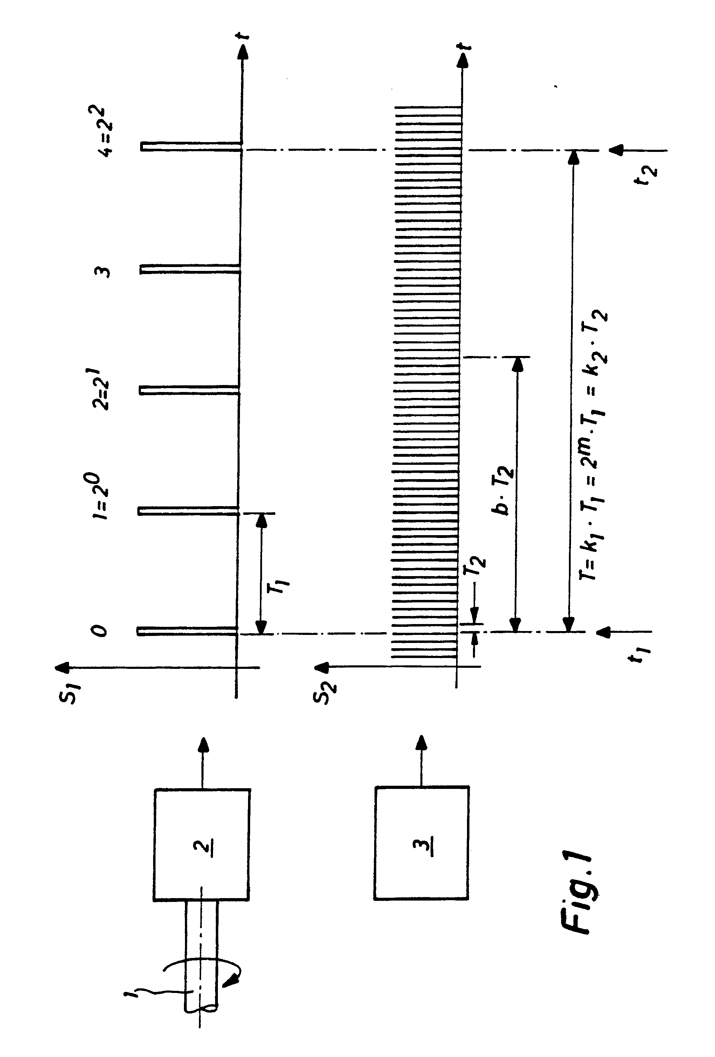

Fig. 1 zeigt eine Welle 1, deren Drehzahl n zu bestimmen sei. Ein Inkremental-Encoder 2 erzeugt

eine Pulsfolge $S_1$, deren Frequenz $f_1$ proportional zur Drehzahl n ist. Der Proportionalitätsfaktor a ist bekannt; er ist gegeben durch die Konstruktion des Inkrementalencoders 2 und das Uebersetzungsverhältnis zwischen Welle 1 und Inkrementalencoder 2. Es gilt also:

$$n = a \bullet f_1 = a \bullet 1/T_1 \qquad (1)$$

wobei $T_1$ die drehzahlabhängige Periodendauer von $S_1$ ist. Zusätzlich wird z.B. mit einem Frequenzgenerator 3 ein Referenzsignal $S_2$ mit konstanter Referenzfrequenz $f_2$ und Periodendauer $T_2$ erzeugt.

Mit Beginn $t_1$ eines Messzyklus - ausgelöst durch einen Puls des Signals $S_1$ - werden die Pulse des Signals $S_1$ und des Referenzsignals $S_2$ in zwei verschiedenen Zählern gezählt. Zur Gewährleistung der relativen Messgenauigkeit werden jeweils mindestens b Pulse des Signals $S_2$ erfasst.

Der Wert b bestimmt sich durch die verlangte relative Messgenauigkeit, welche 1/b beträgt.

In den eingangs erwähnten bekannten Verfahren wird ein Messzyklus beendet, sobald b Pulse von $S_2$ erfasst und das unmittelbar folgende Ende einer Periode von $S_1$ erreicht ist. In Fig. 1 entspricht dies dem Puls "3" von $S_1$.

Beim erfindungsgemässen Verfahren wird ein Messzyklus erst beendet, wenn die Anzahl $k_1$ der erfassten Perioden von $S_1$ eine ganzzahlige Potenz der Zahl 2 (1, 2, 4, 8, ...) ist. In Fig. 1 entspricht dies dem Puls "4" von $S_1$ (Zeitpunkt $t_2$).

In einem Messzyklus werden also $k_1$ Pulse von $S_1$ und $k_2$ Pulse von $S_2$ erfasst, wobei - wie oben angemerkt - die Bedingungen

$$k_2 \geq b \qquad (2)$$

und

$$k_1 = 2^m \ (m = 0, 1, 2, ...) \qquad (3)$$

eingehalten werden.

Es sei T die Dauer eines konkreten Messzyklus. Sodann gilt:

$$T = t_2 - t_1 = k_1 \bullet T_1 = 2^m \bullet T_1 = k_2 \bullet T_2 \qquad (4)$$

Ersetzt man $T_1$ und $T_2$ durch die zugehörigen Frequenzen $f_1$ und $f_2$, so folgt unter Berücksichtigung der Gleichung (1) für die gesuchte Drehzahl:

$$n = a \bullet (k_1/k_2) \bullet f_2 \qquad (5)$$

bzw.

$$n = (a \bullet f_2) \bullet (1/k_2) \bullet k_1 \qquad (6)$$

bzw.

$$n = [(a \bullet f_2) \bullet (1/k_2)] \bullet 2^m \qquad (7)$$

Aus Gleichung (7) wird ersichtlich, dass das vorgeschlagene Verfahren eine Verkürzung der Rechenzeit zur Folge hat: Die Multiplikation des Produktes $[(a \bullet f_2) \bullet (1/k_2)]$ mit der Zahl $k_1 = 2^m$ reduziert sich im Binärsystem auf eine blosse Linksverschiebung dieses Produktes um m Stellen.

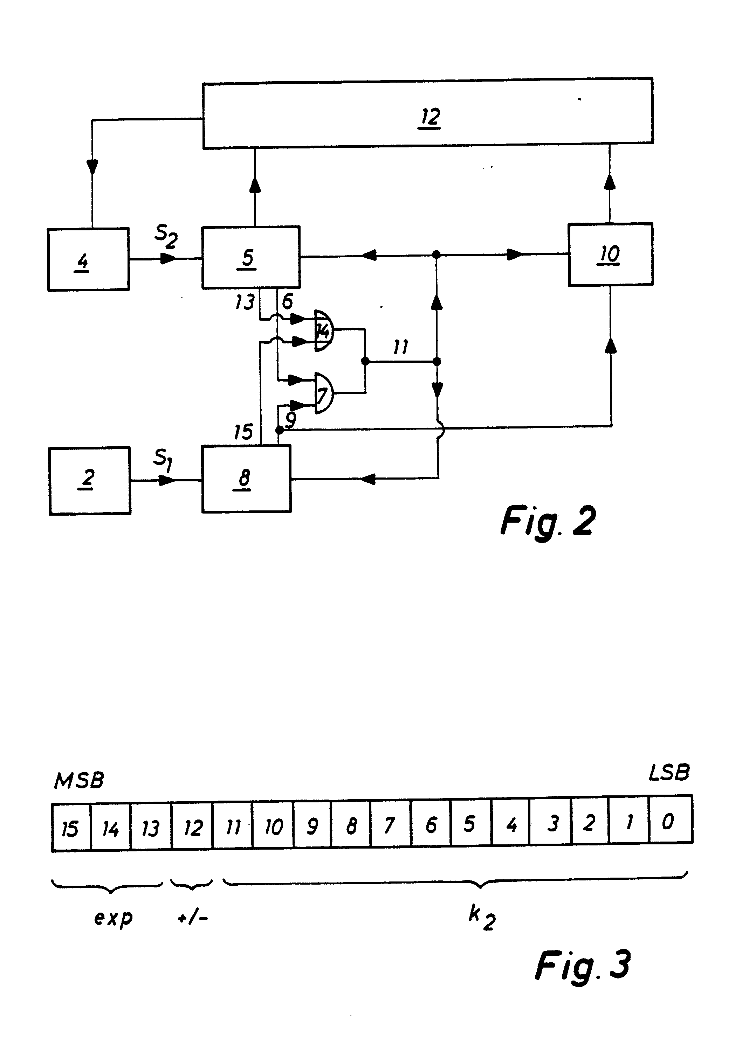

In der in Fig. 2 schematisch dargestellten Schaltung wird zur Erzeugung des Referenzsignals $S_2$ gerade die Taktfrequenz eines im Regler eingebauten Mikroprozessors 4 verwendet (z.B. $f_2 = 921,6$ kHz). In einem Zähler 5 werden die Pulse dieses Signals $S_2$ gezählt und bei Erreichen der Genauigkeitsgrenze ($k_2 = b$; z.B. b = 512) wird über einen logischen Ausgang 6 die Beendigung des Messzyklus auf ein UND-Gatter 7 freigegeben. Die Pulsfolge $S_1$ des Inkremental-Encoders 2 wird auf ein z.B. 16-stufiges Schieberegister 8 geleitet. Dieses gibt seinerseits nach jeweils 1, 2, 4, 8 und 16 Encoder-Pulsen einen Clock-Impuls 9 auf einen Exponentenzähler 10 sowie das UND-Gatter 7. Sofern die Beendigung der Messung über den Ausgang 6 freigegeben wurde, werden - ausgelöst über einen Ausgang 11 des Gatters 7 - erstens die Inhalte der Zähler 5 und 10 an einen Speicher 12 übergeben und zweitens diese Zähler sowie das Schieberegister 8 zurückgesetzt, worauf ein neuer Messzyklus gestartet werden kann. Der im Speicher 12 abgelegte Wert - auf dessen Format nachstehend noch einzugehen ist - wird anschliessend im Mikroprozessor 4 verarbeitet.

Zudem ist die Schaltung für zwei Spezialfälle ausgelegt:

Bei Motorstillstand (n = 0) wird kein Encoderpuls erzeugt. Der Referenzpulszähler 5 läuft nach einer gewissen Zeit über und löst über einen Ausgang 13 und ein ODER-Gatter 14 das Ende des Messzyklus aus. Der Zähler 5 wird so konzipiert, dass der Ueberlauf spätestens bei Erreichen der maximalen Dauer eines Messzyklus (z.B. 4,44 msec) erfolgt.

Im zweiten Fall, bei Ueberdrehzahl der Welle 1, wird die maximale Anzahl Encoderpulse, für die das Schieberegister ausgelegt ist (im vorliegenden Fall 16 Pulse), erreicht, bevor der Zähler 5 die für die Genauigkeitsanforderungen verlangte Anzahl Pulse des Signals $S_2$ erfasst hat ($k_2 < b$). Das Schieberegister 8 beendet den Messzyklus über einen Ausgang 15 und das Gatter 14.

Das erfindungsgemässe Verfahren hat nicht nur eine Verkürzung der Rechenzeit zur Folge, sondern erlaubt auch, das Messresultat gerade in dem vom Mikroprozessor des Regelsystems verwendeten Datenformat darzustellen, so dass der Mikroprozessor zusätzlich von der Aufbereitung des Messresultats entbunden wird.

Fig. 3 zeigt ein mögliches Datenformat, in welchem das Messresultat bei der vorgängig beschriebenen Schaltung im Speicher 12 abgelegt wird.

Es handelt sich dabei um ein 16-Bit Format, bei dem gemäss üblicher Darstellung Bit "0" dem "least significant bit" (LSB) und Bit "15" dem "most significant bit" (MSB) entspricht. Die Bits "0-11" enthalten den Wert des Zählers 5, also die Anzahl gezählter Referenzpulse $k_2$. Das Bit "12" enthält das Vorzeichen von $k_2$, welches dem Drehsinn der Welle 1 entspricht und z.B. mittels eines zweiten Encoder-Signals (nicht dargestellt) im Speicher 12 abgelegt wird. Die Bits "13-15" enthalten den Wert "exp" des Exponentenzählers 10, also einen Wert, der die Information über die Anzahl $k_1$ der in die Messung eingegangenen Perioden des Encodersignals $S_1$ enthält. Für die oben beschriebene Schaltung gilt dabei folgende Beziehung:

$$exp = m + 1 \quad (m = 0, 1, 2, 3, 4) \quad (8)$$

Unter Berücksichtigung von Gleichung (7) folgt somit für die gesuchte Drehzahl:

$$n = [(a \bullet f_2) \bullet (1/k_2)] \bullet 2^{(exp-1)} \quad (9)$$

Das erfindungsgemässe Verfahren und die beschriebene Schaltung bewirken also in zweierlei Hinsicht eine Entlastung des Mikroprozessors einer Regelschaltung: einerseits durch eine Reduktion der Anzahl Rechenoperationen und anderseits durch eine hardwaremässige, ausserhalb des Mikroprozessors und parallel zur Messung stattfindende Aufbereitung des Messresultats.

Sowohl das Verfahren als auch die entsprechende Schaltung zeichnen sich dadurch aus, dass sie ohne grossen Aufwand höheren Anforderungen angepasst werden können. Durch einfache Erhöhung der Encoderpulszahl pro Umdrehung (z.B. durch ein anderes Uebersetzungsverhältnis zwischen Welle 1 und Encoder 2) und Erweiterung des des Exponentenzählers 10 kann die Messdynamik auf wirtschaftliche Weise und unter Einhaltung unveränderter Messgenauigkeit vergrössert werden.

## Patentansprüche

1. Verfahren zur digitalen Drehzahlmessung, bei dem eine erste Pulsfolge ($S_1$) mit drehzahlproportionaler Frequenz ($f_1$) und eine zweite Pulsfolge ($S_2$) mit konstanter Referenzfrequenz ($f_2$) erzeugt werden, und bei dem in einem Messzyklus sowohl die Zahl ($k_1$) der Pulse der ersten Pulsfolge als auch die Zahl ($k_2$) der Pulse der zweiten Pulsfolge bestimmt werden, wobei ein Messzyklus jeweils durch einen Puls der ersten Pulsfolge ($S_1$) ausgelöst und beendet wird und mindestens eine vorgegebene Mindestzahl (b) von Pulsen der zweiten Pulsfolge ($S_2$) umfasst, dadurch gekennzeichnet, dass die Zahl ($k_1$) der Pulse der ersten Pulsfolge ($S_1$), welche in einem Messzyklus erfasst werden, eine ganzzahlige Potenz der Zahl 2 ist.

2. Verfahren nach einem der vorangehenden Ansprüche, dadurch gekennzeichnet, dass jeweils ein Messzyklus beendet wird, wenn die Zahl ($k_1$) der Pulse der ersten Pulsfolge ($S_1$) einen ersten vorgegebenen Maximalwert erreicht, bevor die Zahl ($k_2$) der Pulse der zweiten Pulsfolge ($S_2$) die vorgegebene Mindestzahl (b) erreicht (Ueberdrehzahl).

3. Verfahren nach Anspruch 1, dadurch gekennzeichnet, dass jeweils ein Messzyklus beendet wird, wenn die Zahl ($k_2$) der Pulse der zweiten Pulsfolge ($S_2$) einen zweiten vorgegebenen Maximalwert erreicht, bevor die erste Pulsfolge eine Periode vollendet hat (Motorstillstand).

4. Schaltung zur Durchführung des Verfahrens nach einem der vorangehenden Ansprüche, dadurch gekennzeichnet, dass die Pulse der ersten Pulsfolge ($S_1$) auf ein Schieberegister (8) geleitet werden, welches seinerseits jeweils einen Puls auf einen Exponenten-Zähler (10) abgibt, wenn die Zahl ($k_1$) der erfassten Pulse eine ganzzahlige Potenz von 2 ist, dass die Pulse der zweiten Pulsfolge ($S_2$) auf einen Zähler (5) geleitet werden und dass am Ende eines Messzyklus der Inhalt (exp) des Exponenten-Zählers (10) sowie der Inhalt ($k_2$) des Zählers (5) in einem Speicher (12) abgelegt werden.

5. Schaltung nach Anspruch 4, dadurch gekennzeichnet, dass das Messresultat im Speicher (12) in Form einer Mantisse ($k_2$) mit zugehörigem Vorzeichen und Exponenten (exp) abgespeichert wird.

## Claims

1. Method for the digital measurement of a rotational speed, where one generates a first sequence ($S_1$) of pulses with a frequency ($f_1$) which is proportional to the rotational speed, and a second sequence ($S_2$) with a constant frequency ($f_2$), and where both the number ($k_1$) of pulses belonging to the first sequence and the number ($k_2$) belonging to the second sequence are counted during a measuring cycle, such a measuring cycle being triggered and terminated through a pulse of the first sequence ($S_1$) and encompassing at least a predetermined minimal number (b) of pulses belonging to the second sequence ($S_2$), characterized in that within a measuring cycle the number ($k_1$) of pulses belonging to the first sequence ($S_1$) is an integer power of the number 2.

2. Method according to any preceding claim, characterized in that a measuring cycle terminates whenever the number ($k_1$) of pulses belonging to the first sequence ($S_1$) attains a predetermined maximum value before the number ($k_2$) of pulses belonging to the second sequence ($S_2$) attains the predetermined minimal number (b) (overrevving).

3. Method according to claim 1, characterized in that a measuring cycle terminates whenever the number ($k_2$) of pulses belonging to the second sequence ($S_2$) attains a second predetermined maximum value before the first sequence has terminated a period (engine at standstill).

4. Circuit for performing the method of any preceding claim, characterized in that the pulses of the first sequence ($S_1$) are input into a shift register (8), which in turn delivers a pulse to an exponent-counter (10) when the number ($k_1$) of the detected pulses is an integer power of 2, in that the pulses of the second sequence ($S_2$) are being delivered to a counter (5), and in that at the end of a measuring cycle both the content (exp) of the exponent-counter (10) and the content ($k_2$) of the counter (5) are stored in a memory (12).

5. Circuit according to claim 4, characterized in that the result of the measurement is stored in the memory (12) as a mantissa ($k_2$) with an associated sign, and an exponent (exp).

**Revendications**

1. Procédé de mesure numérique de vitesse de rotation; dans lequel on engendre un premier train d'impulsions ($S_1$) de fréquence ($f_1$) proportionnelle à la vitesse de rotation et un second train d'impulsions ($S_2$) de fréquence de référence constante ($f_2$) et dans lequel dans un cycle de mesure on détermine aussi bien le nombre ($k_1$) d'impulsions du premier train d'impulsions ($S_1$) que le nombre ($k_2$) d'impulsions du second train d'impulsions, un cycle de mesure étant à chaque fois déclenché et terminé par une impulsion du premier train d'impulsions ($S_1$) et comportant au moins un nombre minimal prédéterminé (b) d'impulsions du second train d'impulsions ($S_2$) caractérisé en ce que le nombre ($k_1$) d'impulsions su premier train d'impulsions ($S_1$), qui sont enregistrées dans un cycle de mesure, est une puissance entière du nombre 2.

2. Procédé selon l'une des revendications précédentes caractérisé en ce qu'à chaque fois on termine un cycle de mesure quand le nombre ($k_1$) d'impulsions du premier train d'impulsions ($S_1$) atteint une première valeur maximale prédéterminée avant que le nombre ($k_2$) d'impulsions du second train d'impulsions ($S_2$) n'atteigne le nombre minimal prédéterminé (b) (nombre de rotation supérieur).

3. Procédé selon la revendication 1, caractérisé en ce qu'à chaque fois on termine un cycle de mesure quand le nombre ($k_2$) d'impulsions du second train d'impulsions ($S_2$) atteint une seconde valeur maximale prédéterminée avant que le premier train d'impulsions n'ait effectué une période (arrêt du moteur).

4. Circuit de mise en oeuvre dudit procédé selon l'une des revendications précédentes, caractérisé en ce que les impulsions du premier train d'impulsions ($S_1$) sont transmises à un registre à décalage (8), qui à son tour délivre à chaque fois une impulsion à un compteur d'exposant (10), quand le nombre ($k_1$) d'impulsions contenues est une puissance entière de 2, en ce que les impulsions du second train d'impulsions ($S_2$) sont transmises à un compteur (5) et en ce qu'à la fin d'un cycle de mesure, le contenu (exp) du compteur d'exposants (10) ainsi que le contenu ($k_2$) du compteur (5) sont délivrés (5) à une mémoire (12).

5. Circuit selon la revendication 4, caractérisé en ce que le résultat de la mesure est mémorisé dans la mémoire (12) sous forme d'une mantisse ($k_2$) avec le signe correspondant et l'exposant (exp).

Fig.1

$S_1$

0    $1=2^0$    $2=2^1$    3    $4=2^2$

$T_1$

$S_2$

$T_2$

$b \cdot T_2$

$T = k_1 \cdot T_1 = 2^m \cdot T_1 = k_2 \cdot T_2$

$t_1$    $t_2$

EP 0 288 683 B1

Fig. 2

Fig. 3